# NEUE EUROPÄISCHE PATENTSCHRIFT

(11) **EP 3 183 162 B2**
(45) Veröffentlichungstag und Bekanntmachung des Hinweises auf die Entscheidung über den Einspruch: **15.11.2023**
(45) Hinweis auf die Patenterteilung: 06.11.2019
(21) Anmeldenummer: 15759408.6
(22) Anmeldetag: 18.08.2015
(51) Int. Cl.: F16H 1/22, B62D 35/00, F16H 1/16

(54) **STELLANTRIEB FÜR EINE LUFTLEITVORRICHTUNG**
ACTUATING DRIVE FOR AN AIR DEFLECTOR DEVICE
MÉCANISME DE COMMANDE POUR DISPOSITIF DE GUIDAGE D'AIR

(30) Priorität: 22.08.2014 DE 102014012292
(43) Veröffentlichungstag der Anmeldung: 28.06.2017
(73) Patentinhaber: Dr. Ing. h.c. F. Porsche AG, 70435 Stuttgart (DE); Audi AG, 85045 Ingolstadt (DE); SUSPA GmbH, 90518 Altdorf (DE)
(72) Erfinder: HERRMANN, Bernd, 71139 Ehningen (DE); PAUL, Joachim, 70563 Stuttgart (DE); WEBER, Sebastian, 73732 Esslingen (DE); ULLRICH, Steffen, 85748 Garching (DE); SPIELBERG, Daniel, 90480 Nürnberg (DE); PREIS, Johannes, 93077 Bad Abbach/Lengfeld (DE); HOLLERBAUM, Bernd, 95473 Creußen (DE); GLASS, Matthias, 90530 Wendelstein (DE); BIELESCH, Harald, 91220 Schnaittach (DE); LANG, Johannes, 81735 München (DE); FEIHL, Marc, 91284 Neuhaus (DE)
(74) Vertreter: Sturm, Christoph
(86) Internationale Anmeldenummer: PCT/EP2015/068885
(87) Internationale Veröffentlichungsnummer: WO 2016/026828

(56) Entgegenhaltungen:
- WO-A1-2008/041757
- CN-U- 201 944 199
- CN-U- 203 147 000
- DE-A1- 3 711 386
- DE-A1- 10 160 056
- DE-B3-102013 205 246
- US-A- 5 570 606
- US-A1- 2004 256 885

## Beschreibung

Die Erfindung betrifft einen Stellantrieb für eine aus einer Nicht-Gebrauchsstellung in unterschiedliche Gebrauchsstellungen verstellbare Luftleitvorrichtung an einem Fahrzeug mit einem steuerbaren Elektromotor, mit einem Untersetzungsgetriebe, sowie mit Mitteln zur mechanischen Übertragung der Stellkraft auf die Luftleitvorrichtung, wobei die Luftleitvorrichtung ein Heckspoiler des Fahrzeugs ist.

Bei Kraftfahrzeugen, insbesondere bei sportlichen Kraftfahrzeugen werden zur Erhöhung des Abtriebs bzw. zur besseren Straßenhaftung und insgesamt zur Verbesserung der Straßenlage und zum optimalen Stabilisieren des Fahrzeugs Luftleitvorrichtungen angebracht, die entweder lediglich aus einer Nicht-Gebrauchsstellung in eine Gebrauchsstellung, unter Umständen aber auch in eine Vielzahl von unterschiedlichen Gebrauchsstellungen bringbar sind. Die Verstellung wird üblicherweise über einen Elektromotor, vorzugsweise einen Gleichstrom-Elektromotor, der mittels eines Steuergeräts in Abhängigkeit von den jeweils erforderlichen Einstellungen der Luftleitvorrichtung ansteuerbar ist. Über ein diesem Elektromotor nachgeschaltetes Unter- bzw. Übersetzungsgetriebe und über Mittel zur mechanischen Übertragung der vom Elektromotor aufgebrachten Stellkraft auf die Luftleitvorrichtung wird deren Verstellung bewirkt. Die technischen Anforderungen an einen solchen Stellantrieb bei modernen Kraftfahrzeugen sind relativ hoch: Es wird ein relativ einfacher, störungsunanfälliger und sehr kompakter Aufbau bei geringstem Gewicht gefordert und gleichzeitig soll ein möglichst geräuscharmer bzw. geräuschloser Betrieb möglich sein.

Aus dem Stand der Technik sind eine Reihe von Lösungen bekanntgeworden, mit denen versucht wird, der sich stellenden Problematik gerecht zu werden. So offenbart die DE 103 48 284 A1 einen Stellantrieb für eine Luftleitvorrichtung, insbesondere für einen Heckspoiler eines Fahrzeugs, der mit einem vom Elektromotor angetriebenen Untersetzungsgetriebe über einen Spindelantrieb die Verstellung des Heckspoilers bewirkt. Aus der DE 10 2008 024 893 A1 ist eine Lösung bekannt geworden, bei der über ein separates Montageelement die Antriebseinrichtung für die Luftleitvorrichtung von der Karosserie des Kraftfahrzeugs entkoppelt angeordnet werden soll, um eine Geräuschminimierung erreichen zu können.

Aus der WO 2008/041757 A1 ist eine Stellantriebsvorrichtung bekannt geworden, bei der über ein vom Elektromotor angetriebenes, zentral angeordnetes Übersetzungsgetriebe und eine von diesem angetriebenen Verstellwelle über mit Zahnrädern auf der Verstellwelle zusammenwirkende Zahnstangen ein Aus- bzw. Einfahren einer Luftleitvorrichtung erreicht werden soll.

Die DE 37 11 386 A1 und die US 4 925 236 offenbaren Stellantriebe für Luftleitvorrichtungen, bei denen der Elektromotor über eine Schnecke und ein Schneckenrad und zum Teil weitere Getriebeelemente die Verstellung der Luftleitvorrichtung bewirkt. Diesen Lösungen liegt offensichtlich die Erkenntnis zugrunde, dass mit Schneckentrieben hohe bis sehr hohe Untersetzungen erreicht werden können und dass Schneckentriebe zu den Getriebevorrichtungen mit den geringsten Geräuschentwicklungen gehören. Außerdem sind Schneckentriebe in aller Regel selbsthemmend.

Die DE 43 23 938 zeigt und beschreibt eine mit einer Heck-Beobachtungsspiegelvorrichtung kombinierte Luftleitvorrichtung für ein Fahrzeug. Bei diesem System sind zwei Schnecken-/Schneckenrad-Triebe kombiniert, um die Synchronisation der Bewegungen von Luftleitvorrichtung und Heck-Beobachtungsspiegelvorrichtung gewährleisten zu können.

DE 101 60 056 A1 offenbart einen Zahnradantrieb eine Heizungs- und Belüftungsanlage. US 5 570 606 A1 offenbart ein Untersetzungsgetriebe von Kameras. CN 201 944 199 U offenbart einen Stellabtreib mit Schneckentrieben.
Von den Motorrädern BMW R 1150 RT und BMW R 1100 RT sind jeweils Windschilde mit einem Stellantrieb bekannt, wobei der Stellantrieb einen steuerbaren Elektromotor und ein Untersetzungsgetriebe aufweist. Das Untersetzungsgetriebe weist einen ersten, über seine Schnecke an die Abtriebswelle des Elektromotors gekoppelten Schneckentrieb auf, dessen Schneckenrad mit einer Schnecke eines zweiten Schneckentriebs in Wirkverbindung bringbar ist, dessen Schneckenrad die Verstellwelle für die Luftleitvorrichtung antreibt, wobei der erste Schneckentrieb größer als der zweite Schneckentrieb übersetzt ist.
EP 0 685 385 B1 offenbart eine Einrichtung zum Verstellen eines Windschildes eines Motorrads mit Zwischengetrieben, die selbsthemmend sind.

Der Erfindung liegt die Aufgabe zugrunde, einen Stellantrieb für eine als Heckspoiler ausgebildete Luftleitvorrichtung anzubieten, die sich - wie bereits erwähnt - durch sehr kompakte und gewichtssparende Bauweise mit minimaler Geräuschentwicklung auszeichnet und die für die unterschiedlichen Stellungen der Luftleitvorrichtungen auf den Gebrauch von zusätzlichen Positionierungs- bzw. Fixierungselemente verzichten kann.

Diese Aufgabe wird durch einen Stellantrieb nach Anspruch 1 gelöst. Das Untersetzungsgetriebe des Stellantriebs weist einen ersten, über seine Schnecke an die Antriebswelle des Elektromotors gekoppelten Schneckentrieb auf, dessen Schneckenrad mit einer Schnecke eines zweiten Schneckentriebs in Wirkverbindung bringbar ist, dessen Schneckenrad die Verstellwelle für die Luftleitvorrichtung antreibt.

Dabei ist der erste Schneckentrieb kleiner als der zweite Schneckentrieb übersetzt. In zweckmäßiger Weitergestaltung des Gegenstandes der Erfindung kann das Übersetzungsverhältnis des zweiten Schneckentriebs zum ersten Schneckentrieb in etwa 2:1 betragen.

Ein Stellantrieb nach der Erfindung kommt vorzugsweise mit einer Antriebseinheit - auch bei relativ ausladenden und unter Umständen mit höheren Gewichten ausgestatten Luftleitvorrichtungen - aus; insbesondere dann, wenn das Schneckenrad des zweiten Schneckentriebs in etwa mittig auf der vom ihm angetriebenen Verstellwelle angeordnet ist. Damit wird eine mittige Anordnung des Stellantriebs und somit eine in jeder Beziehung gleichmäßige Übertragung der Verstellkräfte auf die in aller Regel seitlich außen angeordneten Verstellmittel für die Luftleitvorrichtung erreicht.

Weitere Merkmale und Einzelheiten des Gegenstandes der Erfindung werden anhand eines in der Zeichnung vereinfacht dargestellten Ausführungsbeispiels nachfolgend näher beschrieben.

Es zeigt:
Fig. 1 eine Luftleitvorrichtung schematisch mit einem zentral angeordneten Stellantrieb nach der Erfindung;
Fig. 2 den Aufbau des Untersetzungsgetriebes eines Stellantriebs nach der Erfindung
   und
Fig. 3 eine Gesamtansicht eines nach der Erfindung aufgebauten Stellantriebs.

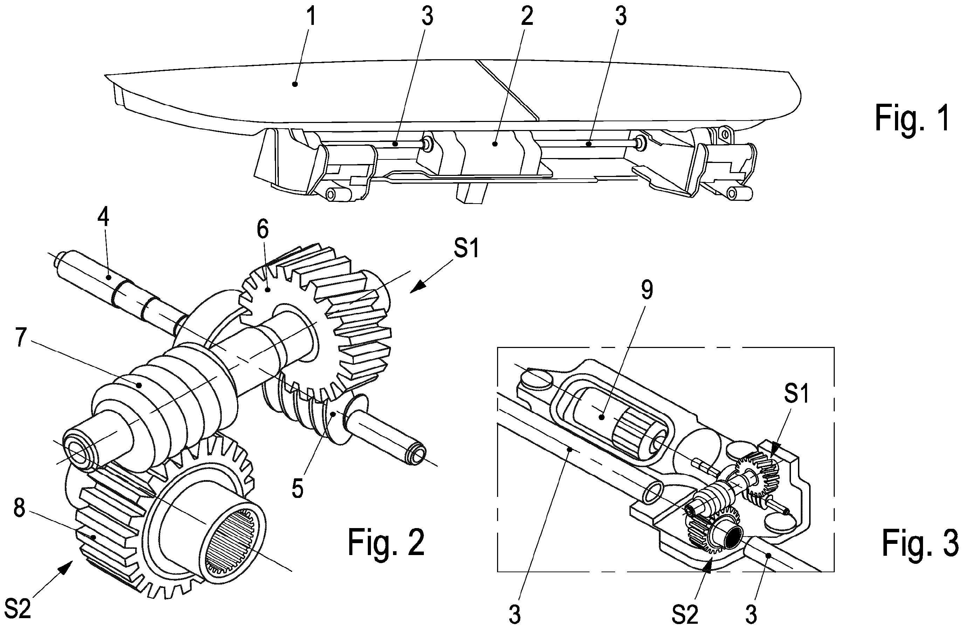

Fig. 1 zeigt eine Luftleitvorrichtung 1, ein in beliebige Positionen zu einem Kraftfahrzeug ausfahrbares Spoilerblatt bzw. einen sog. Heckspoiler, die z.B. im Heckbereich eines sportlichen Kraftfahrzeuges angeordnet sein kann. Eine solche Luftleitvorrichtung 1 ist zumindest zwischen einer Gebrauchsstellung, bei der sie aus der Karosseriekontur des Fahrzeugs in eine abgehobene Position ausgefahren ist und einer Nicht-Gebrauchsstellung, in der sie in sie umgebende Karosserieteile des Fahrzeuges annähernd formangepasst eingefahren bzw. zumindest in eine die Luftströmung wenig bis gar nicht beeinflussende Position gebracht ist, verstellbar. Diese Verstellbewegung wird über eine Antriebsvorrichtung 2 bewirkt. Diese Antriebsvorrichtung 2 ist üblicherweise aufgebaut aus einem Elektromotor und einem mit dem Elektromotor zusammenwirkenden Untersetzungsgetriebe. Das Untersetzungsgetriebe wirkt auf eine Antriebswelle 3, die mit Mitteln zur mechanischen Übertragung der von der Antriebsvorrichtung 2 ausgehenden Stellkraft auf die Luftleitvorrichtung 1 zusammenwirkt. Diese Mittel zur mechanischen Übertragung der Stellkraft sind in an sich bekannter Weise aus dem Stand der Technik bekannt; auf sie soll hier als nicht zum Gegenstand der Erfindung gehörig nicht näher eingegangen werden.

In Fig. 2 ist der Stellantrieb nach der Erfindung näher dargestellt: Über die Abtriebswelle 4 des Elektromotors wird eine Schnecke 5 eines ersten Schneckentriebs S1 angetrieben. Die Schnecke 5 wirkt mit einem Schneckenrad 6 zusammen, das die Schnecke 7 eines zweiten Schneckentriebs S2 antreibt. Um das Verdrehspiel der Abtriebswelle 4 zu reduzieren, wird die Zwischenwelle, definiert u.a. über die Bauteile 6 und 7, mittels Federelemente vorgespannt. Die Schnecke 7 arbeitet auf ein Schneckenrad 8, über das - direkt oder indirekt - die Verstellwelle 3 angetrieben wird, bzw. bei mittlerer Anordnung des Stellantriebs die nach beiden Seiten abgehenden Verstellwellen 3 angetrieben werden.

Um die Vorteile der Verwendung eines Schneckentriebs für einen solchen Stellantrieb optimal nutzen zu können, ist es zweckmäßig, Über- bzw. Untersetzungsverhältnisse für den ersten Schneckentrieb in der Größenordnung von ca. 10 und für den zweiten Schneckentrieb in der Größenordnung von ca. 23 zu wählen. In jedem Fall sollte der zweite Schneckentrieb in einem Verhältnis von etwa 2:1 zum ersten Schneckentrieb übersetzt sein. Mit einem solchen Über- bzw. Untersetzungsverhältnis wird einerseits größtmögliche Selbsthemmung im Getriebe erreicht, so dass die Luftleitvorrichtung in jeder beliebigen Positionierung ohne zusätzliche Positionier- bzw. Arretierungsmittel auch bei höheren Geschwindigkeiten des Fahrzeugs bzw. höheren Winddrücken unveränderlich stehenbleibt erreicht; andererseits ist damit auch eine kaum wahrnehmbare Geräuschentwicklung umsetzbar.

Fig. 3 zeigt schematisch die Anordnung des Stellantriebs nach Fig. 2 in Bezug auf den diesen antreibenden Elektromotor 9, sowie die Verstellwellen 3, die zu den mechanischen Stellvorrichtungen für die Luftleitvorrichtung führen. Der Elektromotor 9 wird hierbei komplett elastisch entkoppelt, z.B. über spezielle Kupplungen bzw. Entkopplungselemente aus Gummi, welche jeweils stirnseitig am Elektromotor 9 vorgesehen sind.

### Bezugszeichenliste:

- S1: erster Schneckentrieb
- S2: zweiter Schneckentrieb

- 1: Luftleitvorrichtung (Heckspoiler)
- 2: Antriebsvorrichtung
- 3: Verstellwelle
- 4: Abtriebswelle
- 5: Schnecke
- 6: Schneckenrad
- 7: Schnecke
- 8: Schneckenrad
- 9: Elektromotor

## Patentansprüche

1. Stellantrieb einer aus einer Nicht-Gebrauchsstellung in unterschiedliche Gebrauchsstellungen verstellbaren Luftleitvorrichtung (1) an einem Fahrzeug, wobei die Luftleitvorrichtung (1) ein Heckspoiler des Fahrzeugs ist, mit einem steuerbaren Elektromotor (9) und mit einem Untersetzungsgetriebe (S1; S2), sowie mit Mitteln zur mechanischen Übertragung der Stellkraft auf die Luftleitvorrichtung (1), **dadurch gekennzeichnet, dass** das Untersetzungsgetriebe (S1; S2) einen ersten, über seine Schnecke (5) an die Abtriebswelle (4) des Elektromotors (9) gekoppelten Schneckentrieb (S1) aufweist, dessen Schneckenrad (6) mit einer Schnecke (7) eines zweiten Schneckentriebs (S2) in Wirkverbindung bringbar ist, dessen Schneckenrad (8) die Verstellwelle (3) für die Luftleitvorrichtung (1) antreibt, wobei der erste Schneckentrieb (S1) kleiner als der zweite Schneckentrieb (S2) übersetzt ist.

2. Stellantrieb nach Anspruch 1, **dadurch gekennzeichnet, dass** der zweite Schneckentrieb (S2) in etwa im Verhältnis 2:1 zum ersten Schneckentrieb (S1) untersetzt ist.

3. Stellantrieb nach einem der vorstehenden Ansprüche, **dadurch gekennzeichnet, dass** die zweite Stufe selbsthemmend und die erste Stufe wirkungsgradoptimiert ausgelegt ist.

4. Stellantrieb nach einem der vorstehenden Ansprüche, **dadurch gekennzeichnet, dass** das Schneckenrad (8) des zweiten Schneckentriebs (S2) in etwa mittig zu bzw. auf der von ihm angetriebenen Verstellwelle/Verstellwellen (3) angeordnet ist.

5. Stellantrieb für eine Luftleitvorrichtung an einem Fahrzeug an einem der vorhergehenden Ansprüchen, **dadurch gekennzeichnet, dass** das Fahrzeug ein Kraftfahrzeug ist.

## Claims

1. Actuating drive of an air deflector device (1) that can be adjusted from a non-use position into different use positions on a vehicle, the air deflector device (1) being a rear spoiler of the vehicle, comprising a controllable electric motor (9) and comprising a step-down mechanism (S1; S2), and comprising means for the mechanical transmission of the actuating force to the air deflector device (1), **characterized in that** the step-down mechanism (S1; S2) has a first worm drive (S1) which is coupled via its worm (5) to the output shaft (4) of the electric motor (9) and of which the worm wheel (6) can be brought into operative connection with a worm (7) of a second worm drive (S2), of which the worm wheel (8) drives the adjusting shaft (3) for the air deflector device (1), the first worm drive (S1) being stepped up to a lesser extent than the second worm drive (S2).

2. Actuating drive according to Claim 1, **characterized in that** the second worm drive (S2) is stepped down approximately in the ratio 2:1 relative to the first worm drive (S1).

3. Actuating drive according to either of the preceding claims, **characterized in that** the second stage is designed to be self-locking and the first stage is optimized in terms of efficiency.

4. Actuating drive according to one of the preceding claims, **characterized in that** the worm wheel (8) of the second worm drive (S2) is arranged approximately centrally to and on the adjusting shaft/the adjusting shafts (3) driven thereby.

5. Actuating drive of an air deflector device on a vehicle according to one of the preceding claims, **characterized in that** the vehicle is a motor vehicle.

## Revendications

1. Actionneur d'un dispositif de guidage d'air (1) situé sur véhicule et réglable d'une position de nonutilisation dans différentes positions d'utilisation, le dispositif de guidage d'air (1) étant un becquet du véhicule, ledit actionneur comprenant un moteur électrique commandable (9) et un réducteur (S1 ; S2), ainsi que des moyens de transmission mécanique de la force d'actionnement au dispositif de guidage d'air (1), **caractérisé en ce que** le réducteur (S1 ; S2) comportant un premier entraînement à vis sans fin (S1) qui est accouplé par le biais de sa vis sans fin (5) à l'arbre de sortie (4) du moteur électrique (9) et dont la roue à vis sans fin (6) peut être reliée fonctionnellement à une vis sans fin (7) d'un deuxième entraînement à vis sans fin (S2) dont la roue à vis sans fin (8) entraîne l'arbre de réglage (3) destiné au dispositif de guidage d'air (1), le premier entraînement à vis sans fin (S1) étant plus petit que le deuxième entraînement à vis sans fin (S2).

2. Actionneur selon la revendication 1, **caractérisé en ce que** le deuxième entraînement à vis sans fin (S2) est démultiplé dans un rapport d'environ 2:1 par rapport au premier entraînement à vis sans fin (S1).

3. Actionneur selon l'une des revendications précédentes, **caractérisé en ce que** le deuxième étage est conçu pour être autobloquant et le premier étage est conçu pour optimiser le rendement.

4. Actionneur selon l'une des revendications précédentes, **caractérisé en ce que** la roue à vis sans fin (8) du deuxième entraînement à vis sans fin (S2) est disposée approximativement au centre ou sur l'arbre de réglage/les arbres de réglage (3) qu'elle entraîne.

5. Actionneur destiné à un dispositif de guidage d'air situé sur véhicule selon l'une des revendications précédentes, **caractérisé en ce que** le véhicule est un véhicule automobile.
